# FASCICULE DE BREVET EUROPEEN

(11) **EP 0 712 755 B1**
(45) Date de publication et mention de la délivrance du brevet: **11.06.1997**
(21) Numéro de dépôt: 95402301.6
(22) Date de dépôt: 13.10.1995
(51) Int. Cl.: B60N 2/44, B60N 2/48, B29C 33/00

(54) **Coussin, notamment d'un appui-tête**
Kissen, insbesondere einer Kopfstütze
Cushion, particularly of a head-rest

(30) Priorité: 16.11.1994 FR 9413721
(43) Date de publication de la demande: 22.05.1996
(73) Titulaire: CESA COMPAGNIE EUROPEENNE DE SIEGES POUR AUTOMOBILES, F-92307 Levallois-Perret Cédex (FR)
(72) Inventeur: Hircq, Alain, D-45200 Montargis (FR); Fourrey, François, D-45200 Montargis (FR)
(74) Mandataire: Moncheny, Michel

(56) Documents cités:
- EP-A- 0 130 918
- DE-A- 2 648 952
- FR-A- 2 615 441
- FR-A- 2 623 437

## Description

La présente invention concerne la sellerie et, plus particulièrement, les coussins pour siège et est relative plus spécifiquement à un coussin de préférence apte à être monté mobile notamment pour siège de véhicule par exemple pour appui- tête ou repose-tête (voir par exemple EP-A-0 130 918, correspondant aux préambules des revendications indépendantes 1 et 3).

Il est courant d'utiliser des sièges dont un coussin au moins est monté mobile notamment par basculement afin de pouvoir en modifier l'inclinaison ou l'orientation. Tel est le cas par exemple de certains coussins de sièges pour véhicule notamment automobile terrestre qui comprennent pour l'assise et/ou le dossier d'un siège des coussins latéraux montés mobiles au moins en basculement pour assurer une bonne tenue de l'occupant qui y est assis de manière à ce que ce dernier soit bien "calé" au niveau de ses cuisses et/ou de son dos. Tel est aussi le cas des coussins pour appuis-tête ou repose-têtes de tels sièges qui sont réglables notamment en inclinaison par basculement selon un axe approximativement transversal, par rapport à la direction longitudinale du véhicule et qui, au besoin, sont en outre réglables en hauteur de manière à pouvoir tenir compte de la morphologie de l'occupant qui y est assis et de ses souhaits en matière de confort.

Un coussin de cette nature a une configuration approximativement parallélépipédique avec une embase, un sommet, deux faces opposées dont l'une sert d'appui ou de surface portante et deux joues latérales, et comprend un revêtement extérieur, un rembourrage intérieur et une armature avec une partie interne, une partie au moins partiellement externe qui sert au montage et, le cas échéant, une articulation le plus souvent aussi interne reliant ces parties interne et partiellement externe afin de définir cet axe de basculement pratiquement parallèle à l'embase. La partie au moins partiellement externe de l'armature sert au montage du coussin sur l'ossature du siège, par exemple celle de son dossier avec, s'il y a lieu, interposition d'un dispositif de réglage en expansion, par exemple en hauteur.

Si l'on prend à titre d'exemple le cas du coussin d'un appui-tête réglable notamment en inclinaison, un changement d'orientation s'obtient habituellement en faisant basculer la partie interne de l'armature autour d'un axe défini le plus souvent par une articulation simple ou multiple, située dans le volume du coussin à l'intérieur de son rembourrage ou matelassure, contenu dans le revêtement ou coiffe extérieur.

Cette matelassure est souvent faite d'une mousse en résine synthétique obtenue par une technique de moussage dite "in situ" qui consiste à introduire les substances qui, par réaction chimique, formeront la mousse dans la coiffe ou revêtement, après l'avoir préalablement équipé de son armature qui porte l'articulation et après avoir placé le tout, coiffe et armature, dans un moule approprié.

Lors de la mise en oeuvre de cette technique de "moussage", il faut empêcher que la mousse qui se forme enrobe l'articulation lors de son expansion car, autrement, la manoeuvre de l'articulation serait rendue difficile voire "dure". Il faut aussi empêcher que la mousse en formation s'échappe du volume de la coiffe ou revêtement au voisinage de la partie au moins partiellement extérieure de l'articulation de l'armature.

Lorsqu'on confectionne un repose-tête qui n'est pas réglable en inclinaison il suffit de ménager un ou deux trous dans le matériau de la coiffe ou revêtement pour laisser passer la ou les lame(s) ou tige(s) de la partie partiellement externe de l'armature, qui sert (servent) au montage de l'appui-tête sur l'ossature du dossier du siège. Lorsqu'on confectionne un repose-tête réglable en inclinaison il faut faire ce qu'on appelle en language technique, des "barrières". On place des capots protecteurs par exemple sous forme de deux demi-coquilles encliquetables en matière synthétique, qui enferment en quasi totalité la zone de l'articulation, ainsi que des "enjoliveurs", pièces de finition, embouts ou analogues de préférence aussi en matière synthétique, qui servent à conférer au coussin un aspect correct de présentation en "habillant" les bordures des ouvertures ou trous qui sont ménagés dans la coiffe ou revêtement pour le passage des lames ou tiges de l'armature, et qui autorisent un changement d'inclinaison. Si dans certains cas on n'utilise pas de tels "enjoliveurs", la mousse, lors de sa formation au cours de son expansion, a tendance à fuir et à donner un aspect visuel peu satisfaisant.

Outre ces problèmes purement techniques, ces considérations ont aussi une incidence sur la conception et/ou l'esthétique du coussin. En effet, en général, même lorsqu'un tel appui-tête réglable à la fois en inclinaison et en hauteur, est dans sa position la plus basse c'est-à-dire la position la plus proche du dossier du siège, il subsiste un "jour" entre l'embase du coussin et le haut du dossier, "jour" qui laisse partiellement visible la partie de l'armature servant au montage. Pour certains types de véhicules tels que des "coupés" ou des "cabriolets" par exemple, on souhaite dans certains cas qu'un tel "jour" soit pratiquement supprimé et on tend à faire en sorte que l'appui-tête soit au contact du dossier lorsqu'il occupe sa position de réglage en hauteur la plus basse. Pour parvenir à une solution satisfaisante on a proposé que l'axe d'articulation soit non pas proche ou relativement proche de l'embase, mais plus éloigné de celle-ci en direction du sommet du coussin. On comprend donc que la difficulté augmente puisque si l'on peut pratiquement toujours utiliser des capots protecteurs pour préserver l'articulation, il devient par contre pratiquement impossible d'utiliser des embouts de finition. En effet, de tels embouts de finition ne peuvent plus prendre appui sur les capots protecteurs de l'articulation qui se trouvent profondément reculés dans le coussin. La solution de la simple ouverture ou trou dans l'embase de la coiffe ou revêtement devient impraticable, du fait des risques de fuite de mousse et du manque d'élégance de la finition qui résultent de l'importance de la taille angulaire des ouvertures, trous ou embouts de finition qu'il est nécessaire de leur donner pour permettre les débattements relatifs entre coussin et partie au moins partiellement externe lors des changements d'inclinaison.

L'invention a pour but la confection d'un coussin par exemple destiné à être monté mobile au moins en basculement pour siège, en particulier pour siège de véhicule notamment automobile terrestre par exemple pour confectionner un appui-tête d'un tel siège, qui ne présente pas les inconvénients brièvement rappelés précédemment, de la technique antérieure.

La présente invention a pour objet un coussin (tel que décrit dans la revendication indépendante 3) qui est de préférence apte à être monté mobile au moins en basculement pour siège, et qui a une configuration approximativement parallélépipédique avec une embase, un sommet, deux faces opposées dont l'une sert d'appui et deux joues latérales et qui comprend un revêtement extérieur, un rembourrage intérieur et une armature avec une partie interne, une partie au moins partiellement externe et le cas échéant une articulation interne reliant ces parties interne et partiellement externe afin de définir un axe de basculement qui est pratiquement parallèle à cette embase. Un tel coussin est remarquable en ce que cette embase porte au moins un fourreau qui est saillant vers l'intérieur, qui est délimité par une paroi intérieure et par une paroi extérieure et qui présente une extrémité intérieure ouverte par une fente et une extrémité extérieure ouverte par un orifice et qui est agencé de manière à être apte à recevoir localement au moins la partie partiellement externe de l'armature de façon que le rembourrage qui entoure la paroi intérieure presse la paroi extérieure contre au moins cette partie partiellement externe au moins dans la zone de l'extrémité intérieure ouverte pour prévenir tout passage du rembourrage.

L'invention a aussi pour objet un élément (tel que décrit dans la revendication indépendante 1) destiné à confectionner une telle embase d'un coussin du type précédent.

L'invention vise aussi l'application d'un tel coussin ou d'un tel élément à la fabrication d'un appui-tête de siège notamment pour véhicule terrestre.

D'autres caractéristiques de l'invention ressortiront de la lecture de la description et des revendications qui suivent ainsi que de l'examen des figures du dessin, donné seulement à titre d'exemples, où :
- la figure 1 est une vue perspective schématique partiellement écorchée, d'un mode de réalisation d'un coussin avec une embase selon l'invention pour un appui-tête;
- la figure 2 est une vue développée d'un mode de réalisation d'un élément pour embase de coussin selon l'invention,
- les vues A, B, C, de la figure 3 illustrent une mise en oeuvre de l'invention pour la confection d'un coussin de repose-tête, et
- les figures 4 et 5 sont des vues en perspectives schématiques partielles de deux autres modes de réalisation de l'invention au cours de sa mise en oeuvre.

Les techniques de sellerie et en particulier celles utilisées dans l'industrie automobile pour la confection des coussins de siège et en particulier des coussins de repose-têtes étant bien connues, on ne décrira dans ce qui suit que ce qui concerne directement ou indirectement l'invention. Pour le surplus l'Homme du Métier du secteur technique considéré puisera dans les solutions classiques courantes à sa disposition pour faire face aux problèmes particuliers auxquels il est confronté.

Dans ce qui suit on utilise toujours un même numéro de référence pour identifier un élément homologue quel que soit le mode de réalisaiton ou sa variante d'exécution.

Pour la commodité de l'exposé, on décrira successivement chacun des constituants de l'invention avant d'en exposer au besoin la fabrication, et la mise en oeuvre.

Dans ce qui suit on exposera l'invention à propos de son application particulière pour la confection d'un coussin de repose-tête ou appui-tête. Il est clair que l'invention n'est pas limitée à cette seule application, comme on le comprendra par la suite.

Un coussin selon l'invention est destiné, de préférence, à être monté mobile au moins en basculement. Un tel coussin 100 a une configuration approximativement parallélépipédique avec une embase 101, un sommet 102, deux faces 103 opposées dont l'une sert d'appui par exemple à la tête, et deux joues 104 latérales.

Un tel coussin 100 comprend un revêtement 10 extérieur, un rembourrage 20 intérieur et une armature 30 avec une partie interne 31, une partie 32 au moins partiellement externe et, le cas échéant une articulation 33 interne reliant ces parties interne 31 et partiellement externe 32 afin de définir un axe △ de basculement qui est par exemple parallèle à l'embase 101. Selon le cas cet axe △ est situé, par exemple, relativement proche du sommet 102.

Le revêtement ou coiffe est fait en un tissu ou autre matériau, le rembourrage ou matelassure est fait en une mousse par exemple en polyuréthane obtenue par un "moussage" in situ, et l'armature est par exemple faite à partir de tubes et/ou de pièces mécanosoudées. La partie interne 31 se présente par exemple à la manière d'un étrier avec un pont s'il y a lieu relativement proche du sommet et avec des branches dont les bouts libres sont, s'il y a lieu, réunis à l'aide de l'articulation 33 aux bouts libres correspondants de la partie au moins partiellement externe. Cette partie partiellement externe se présente par exemple à la manière de deux colonnes latérales rectilignes ou coudées, ou bien à la manière d'une lame approximativement médiane rectiligne ou non, et sert au montage du repose-tête sur l'ossature du dossier du siège avec, s'il y a lieu, interposition d'un dispositif de réglage en hauteur de tout type approprié connu. L'articulation comprend au moins un palier et un pivot de tout type classique courant, s'il y a lieu muni de moyens d'immobilisation dans la position d'inclinaison choisie, tels que des rondelles freins. Des capots 330 protecteurs par exemple en forme de deux demi-coquilles mutuellement encliquetables, protègent l'articulation proprement dite et les zones voisines des parties interne et partiellement externe pour les raisons qui ont été indiquées précédemment.

Tout ceci est relativement classique.

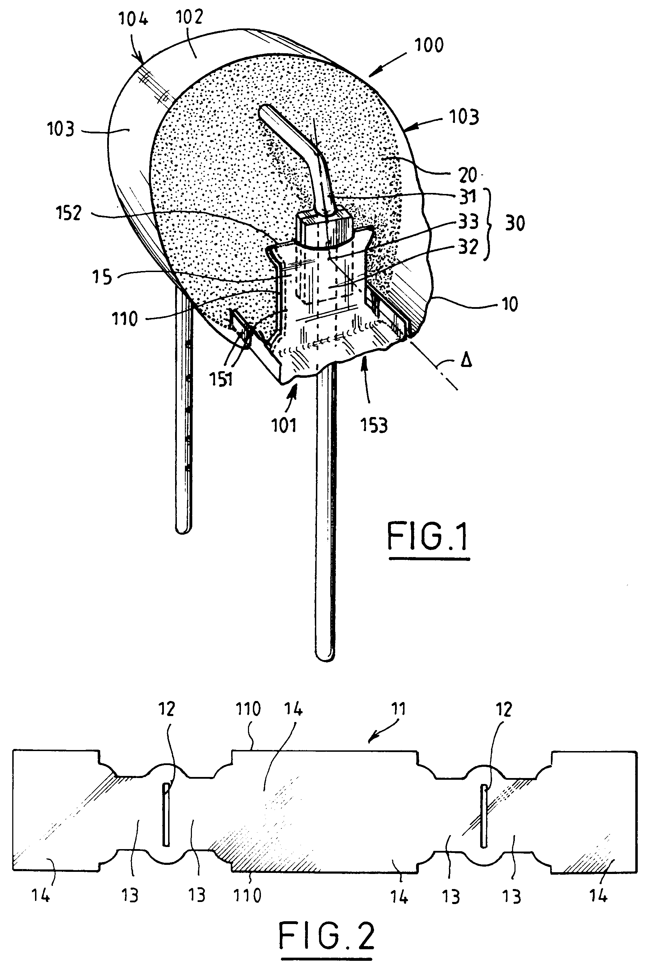

Comme on le voit en examinant les figures 1 et 2 du dessin, l'embase 101 du coussin est faite selon un mode de réalisation, d'un élément 11 longiligne en bandeau avec deux bords 110 opposés, du revêtement 10. Cet élément présente au moins une ouverture 12 transversale et de préférence deux, deux panneaux 13 bordant cette ouverture de part et d'autre de celle-ci, et deux prolongements 14 raccordés chacun à l'un des panneaux 13.

Ces ouverture, panneaux et prolongements sont agencés de manière que lorsque les tronçons de l'un au moins des bords 110 des panneaux 13 sont réunis par une jonction 151 appropriée telle que par exemple une piqûre ou une soudure ou une collure ou un agrafage, convenablement adaptée au matériau dont est fait l'élément, on forme au moins un fourreau 15 ou "chaussette", "cheminée" ou similaire avec une extrémité 152 intérieure ouverte par une fente constituée par cette ouverture 12 et avec une extrémité 153 extérieure ouverte par un orifice. Ce fourreau 15 présente une paroi 1502 intérieure et une paroi 1503 extérieure. La paroi intérieure 1502 est destinée à être au contact du rembourrage 20 et la paroi extérieure 1503 est destinée à venir, localement, au contact de la partie partiellement externe 32 et, le cas échéant de l'articulation 33 et/ou de ses capots protecteurs 330 de l'armature, au moins dans la zone de l'extrémité ouverte.

L'élément longiligne en bandeau étant ainsi conformé, le fourreau faisant saillie par rapport aux prolongements, il peut être réuni par au moins une jonction 151 appropriée notamment aux matériaux telle qu'une couture ou une soudure ou une collure par exemple, d'une part de l'un de ses bords à d'autre part l'une au moins des deux faces opposées, et s'il y a lieu aux joues, du coussin.

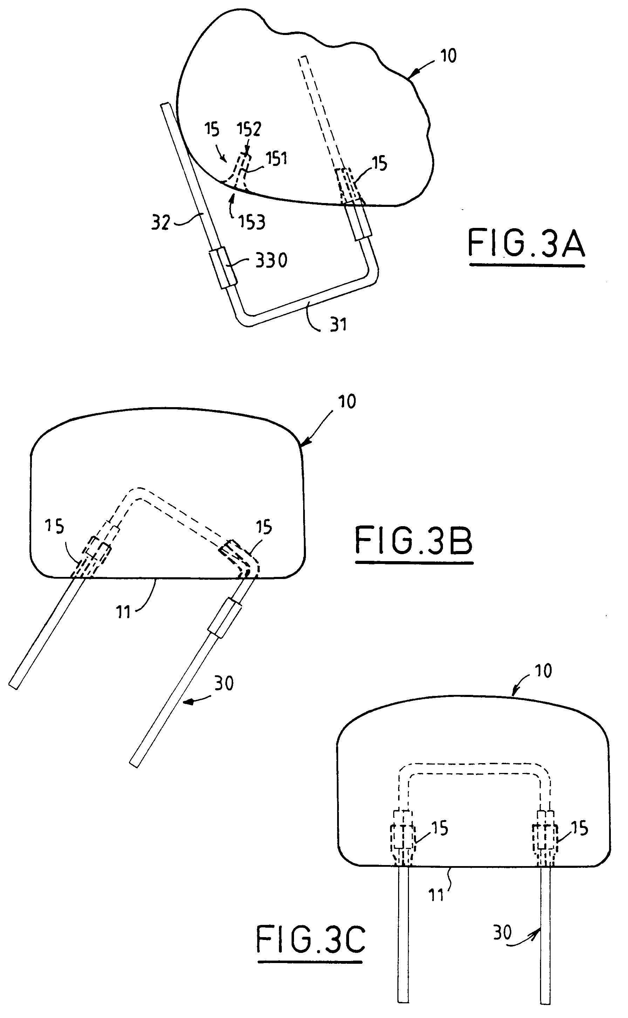

Ceci fait, la coiffe ou revêtement se présente alors à la manière d'une housse, et on peut introduire l'armature dans la coiffe en procédant comme illustré par exemple sur les diverses vues de la figure 3 de manière que chaque fourreau reçoive au moins un côté de la partie partiellement externe et le cas échéant l'articulation correspondante de l'armature.

Il suffit alors de disposer, comme il est classique, l'ensemble ainsi constitué par la coiffe et l'armature dans une empreinte de moule approprié pour y former "in situ" la mousse lors d'une opération de "moussage".

Les fourreaux enserrent l'armature et il n'y a pratiquement pas de fuite. En effet, la mousse qui constitue le rembourrage entoure la paroi intérieure du fourreau et presse la paroi extérieure de ce dernier contre ces parties partiellement externe et, le cas échéant, l'articulation et ses capots protecteurs au moins dans la zone de l'extrémité intérieure ouverte, pour prévenir tout passage du rembourrage. Si de la mousse en cours de formation pénétrait toutefois entre fourreau et armature, elle obturerait immédiatement l'extrémité intérieure ouverte en fente du fourreau, action qui serait renforcée par le fait que la mousse en cours d'expansion presse sur la paroi intérieure du fourreau et applique la paroi extérieure notamment contre les capots protecteurs de l'articulation.

On observera qu'on obtient un excellent aspect visuel au voisinage de la partie partiellement externe apparente de l'armature qui sort par l'embase du coussin, par l'extrémité extérieure ouverte en orifice du fourreau. En effet, chaque fourreau a pris sur une portion au moins de sa longueur une forme qui épouse plus ou moins étroitement celle du capot protecteur correspondant lors de sa mise en place, alors que sur une autre portion de sa longueur, le fourreau affecte, avant "moussage", la forme d'une fente plus ou moins flasque dont les lèvres enserrent localement relativement mollement la partie externe qui y pénètre. Lors du "moussage", sous la pression de la mousse en cours d'expansion, la fente du fourreau se resserre sur la partie externe correspondante et ses lèvres se joignent de part et d'autre de celle-ci, et la coiffe ou revêtement est ensuite ainsi plaqué contre la paroi de l'empreinte du moule pour donner au coussin sa forme définitive.

Après démoulage, le coussin ainsi obtenu a un aspect particulièrement net qui est plus agréable que celui procuré par la vue de fentes dont les lèvres laissent s'échapper de la mousse, habituellement colorée, autour de la partie externe apparente.

De plus, la souplesse de la mousse ne s'oppose pas au déplacement de la ou des tiges de la partie externe de l'armature dans le ou les fourreaux, permettant ainsi un réglage angulaire aisé du repose-tête.

Dans le mode de réalisation qui précède on a décrit un élément longiligne en forme de bandeau d'un seul tenant mais il est clair qu'un tel bandeau peut être obtenu par la réunion de différents pans qui constituent par exemple les panneaux et/ou les prolongements.

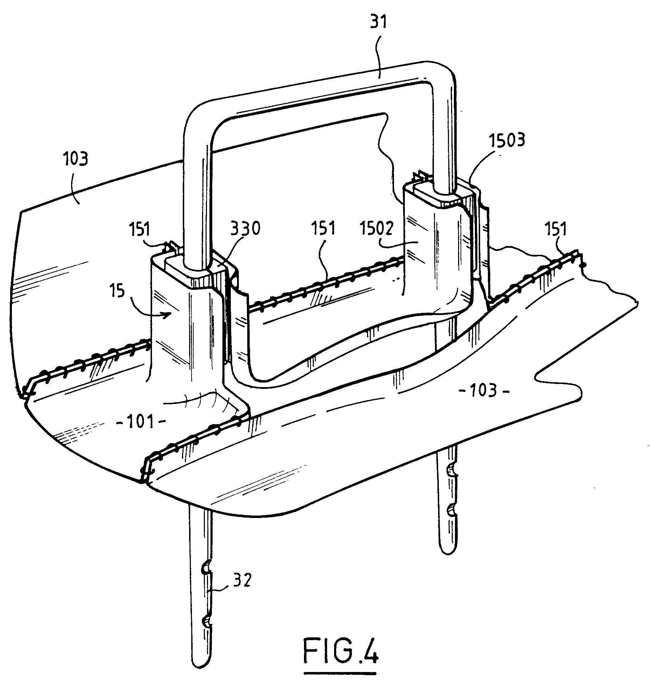

Selon un autre mode de réalisation illustré sur la figure 4, seul le bord d'un côté est muni d'une jonction.

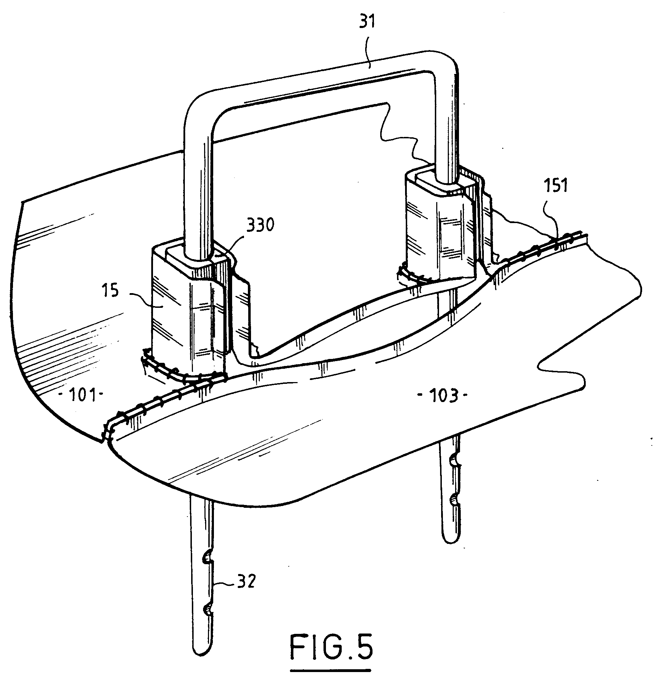

Selon un autre mode de réalisation illustré sur la figure 5, le ou les fourreaux ne présentent qu'un seul bord et celui-ci n'est pas muni d'une jonction. Le ou les fourreaux sont rapportés sur l'embase et solidarisés à elle.

De même, on a dessiné une ouverture transversale close. Il est clair qu'une telle ouverture peut déboucher dans l'un des bords opposés de l'élément longiligne. De la sorte si cet élément en bandeau n'est réuni que par l'un de ses bords au reste du revêtement ou coiffe, il est possible d'insérer plus commodément l'armature en l'introduisant simplement par translation, sans avoir à lui faire faire un retournement, par le bord non-joint où débouche l'ouverture. Ce bord non-joint peut être aussi utilisé pour l'introduction des substances qui formeront la mousse sans avoir à perforer la coiffe ou revêtement. Lorsqu'on utilise un tissu ou similaire pelucheux ou à poils tel un velours, pour confectionner l'embase et le revêtement ou coiffe, les lisières ou bordures retournées vers l'intérieur du bord non-joint de l'embase et du reste de la coiffe, situées en vis à vis se joignent une fois l'expansion de la mousse faite en ne laissant qu'une ligne pratiquement invisible.

Le ou les fourreaux sont s'il y a lieu fabriqués par exemple par thermoformage d'une substance synthétique appropriée et viennent de matière d'un seul tenant avec l'embase ou sont rapportés sur celle-ci et solidarisés à elle.

Pour parfaire l'étanchéité des fourreaux avec l'armature avant moussage, on peut utiliser des liens tels que des joncs élastiques ou circlips, ou des bagues en un matériau thermorétractable dont la mise en place est facilitée lorsqu'on utilise un élément dont un seul bord est joint au reste de la coiffe ou revêtement. De tels liens sont de préférence placés sur le fourreau pour l'enserrer et l'appliquer contre l'armature, à proximité de son extrémité intérieure ouverte en fente par exemple constituée par l'ouverture transversale.

Comme indiqué auparavant, la technique selon l'invention peut aussi servir à la confection des coussins ou bourrelets latéraux pour assise et/ou dossier de siège de même que pour confectionner des coussins dans lesquels est ménagé au moins un interstice pour le passage d'un pédoncule servant à amarrer au plancher ou à l'ossature ou autre partie de l'assise du siège qu'il porte, la gâche d'une boucle de ceinture de sécurité.

On comprend donc que grâce à l'invention on obtient, sans faire usage d'embouts enjoliveurs de finition, un coussin dont la coiffe est munie d'un orifice apparent net qui enserre localement la partie partiellement externe de l'armature, quelle que soit la position relative, tout en laissant la liberté de réglage angulaire du fait de l'élasticité du rembourrage. Un tel comportement est, en quelque sorte comparable à celui qui résulte du déplacement d'une cuillère plongée dans une pâte et qu'on manipule en la tenant par le manche.

Ce qui précède met bien en lumière les particularités distinctives de l'invention, l'intérêt qu'elle offre et les avantages qu'elle procure.

## Revendications

1. Elément pour confectionner l'embase d'un coussin caractérisé en ce que cet élément (11) porte au moins un fourreau (15) qui est saillant, et qui est délimité par une paroi (1502) intérieure et par une paroi (1503) extérieure et qui présente une extrémité (152) intérieure ouverte par une fente et une extrémité (152) extérieure ouverte par un orifice et qui est agencé de manière à être apte à recevoir localement au moins la partie partiellement externe (32) d'une armature (30) de façon qu'une force exercée sur la paroi intérieure (1502) presse la paroi extérieure (1503) contre au moins cette partie partiellement externe (32) dans la zone de l'extrémité intérieure ouverte (152) pour prévenir tout passage d'un rembourrage (20).

2. Elément selon la revendication 1, pour confectionner l'embase d'un coussin de configuration approximativement parallélépipédique avec, en plus de cette embase (101), un sommet (102), deux faces (103) opposées dont l'une sert d'appui et deux joues (104) latérales, et qui comprend un revêtement (10) extérieur, un rembourrage (20) intérieur et une armature (30) avec une partie (31) interne, une partie (32) au moins partiellement externe et le cas échéant une articulation (33) interne reliant ces parties interne (31) et partiellement externe (32) afin de définir un axe (△) de basculement qui est parallèle à cette embase (101), élément (11) caractérisé en ce qu'il est destiné à constituer l'embase (101) du revêtement (10), est longiligne avec deux bords (110) opposés et présente au moins une ouverture (12) transversale, deux panneaux (13) bordant cette ouverture (12) de part et d'autre de celle-ci et deux prolongements (14) raccordés chacun à l'un de ces panneaux (13), ces ouverture (12), panneaux (13) et prolongements (14) étant agencés de manière que lorsque les tronçons de l'un au moins des bords (110) de ces panneaux (13) sont réunis par une jonction (151) on forme un fourreau (15) qui a une extrémité (152) intérieure ouverte par une fente constituée par cette ouverture (12) et une extrémité (153) extérieure ouverte par un orifice et qui est destiné à recevoir au moins la partie partiellement externe (32) de l'armature (30).

3. Coussin pour siège, qui a une configuration approximativement parallélépipédique avec une embase (101), un sommet (102), deux faces (103) opposées dont l'une sert d'appui et deux joues (104) latérales et qui comprend un revêtement (10) extérieur, un rembourrage (20) intérieur et une armature (30) avec une partie (31) interne, une partie (32) au moins partiellement externe, coussin caractérisé en ce que cette embase (101) porte au moins un fourreau (15) qui est saillant vers l'intérieur, qui est délimité par une paroi (1502) intérieure et par une paroi (1503) extérieure et qui présente une extrémité (152) intérieure ouverte par une fente et une extrémité (153) extérieure ouverte par un orifice et qui est agencé de manière à être apte à recevoir localement au moins la partie partiellement externe (32) de l'armature (30) de façon que le rembourrage (20) qui entoure la paroi intérieure (1502) presse la paroi extérieure (1503) contre au moins cette partie partiellement externe (32) au moins dans la zone de l'extrémité intérieure ouverte (152) pour prévenir tout passage du rembourrage (20).

4. Coussin selon la revendication 3, caractérisé en ce que cette embase (101) est faite d'un élément (11) longiligne avec deux bords (110) opposés du revêtement (10) qui présente au moins une ouverture (12) transversale, deux panneaux (13) bordant cette ouverture (12) de part et d'autre de celle-ci et deux prolongements (14) raccordés chacun à l'un de ces panneaux (13), ces ouverture (12), panneaux (13) et prolongements (14) étant agencés de manière que lorsque les tronçons de l'un au moins des bords (110) de ces panneaux (13) sont réunis par une jonction (151) ils forment au moins un fourreau (15) qui a une extrémité intérieure (152) ouverte par une fente constituée par cette ouverture (12) et une extrémité (153) extérieure ouverte par un orifice et qui est destiné à recevoir au moins la partie partiellement externe (32) de l'armature (30).

5. Coussin selon la revendication 4, caractérisé en ce que cette ouverture (12) débouche dans l'un des bords opposés (110) de l'élément (11).

6. Coussin selon la revendication 4 ou 5, caractérisé en ce que cet élément (11) est un bandeau d'un seul tenant.

7. Coussin selon l'une quelconque des revendications précédentes 4 et suivantes, caractérisé en ce que l'un au moins des deux bords opposés (110) de l'élément longiligne (11) est réuni par une jonction (151) notamment à l'une au moins des deux faces opposées (103) du coussin (100).

8. Coussin selon l'une quelconque des revendications précédentes 3 et suivantes, caractérisé en ce que l'élément longiligne (11) présente deux ouvertures transversales (12).

9. Coussin selon la revendication 3, caractérisé en ce que le fourreau (15) est obtenu par thermoformage.

10. Coussin selon la revendication 9, caractérisé en ce que le fourreau (15) est d'un seul tenant avec l'embase (101).

11. Coussin selon l'une quelconque des revendications 9 et 10 caractérisé en ce que le fourreau ne présente qu'un seul bord.

12. Coussin selon l'une quelconque des revendications précédentes 3 et suivantes, dont l'armature (30) a une articulation (33) interne reliant ces parties interne (31) et partiellement externe (32) afin de définir un axe (△) de basculement qui est parallèle à l'embase (101), caractérisé en ce que l'axe de basculement (△) est proche du sommet (102) du coussin (100).

13. Application d'un coussin ou d'un élément conforme à l'une quelconque des revendications précédentes, à la confection d'un appui-tête de siège notamment pour véhicule terrestre.

14. Application d'un coussin conforme à la revendication 13, où le coussin comprend un rembourrage (20) intérieur en mousse obtenue in-situ dans le revêtement (10) après mise en place de l'armature (30).

## Claims

1. An element for constructing the seating for a cushion characterised in that this element (11) has at least one projecting sleeve (15) which is delimited by an inner wall (1502) and by an outer wall (1503) and which has an inner end (152) opened by a slot and an outer end (152) opened by an orifice and which is arranged so as to be capable of locally receiving at least the partly external part (32) of a reinforcement (30) such that a force exerted on the inner wall (1502) presses the outer wall (1503) against at least this partly external part (32) in the area of the open inner end (152) in order to preclude any passage of a padding (20).

2. An element according to claim 1, for constructing the seating for a cushion of approximately parallelepipedic configuration with, in addition to this seating (101), a top (102), two opposite faces (103), one of which serves as a support, and two lateral cheeks (104), and which comprises an outer covering (10), an inner padding (20) and a reinforcement (30) having an internal part (31), an at least partly external part (32) and, if necessary, an internal joint (33) linking these internal (31) and partly external (32) parts in order to define a tilting axis (△) which is parallel to this seating (101), the element (11) being characterised in that it is designed to constitute the seating (101) for the covering (10), is long and thin with two opposite edges (110) and has at least one transverse opening (12), two panels (13) bordering this opening (12) on either side thereof and two extensions (14), each connected to one of these panels (13), the openings (12), panels (13) and extensions (14) being arranged such that, when the stubs of at least one of the edges (110) of these panels (13) are joined by a splice (151), a sleeve (15) is formed which has an inner end (152) opened by a slot constituted by this opening (12) and an outer end (153) opened by an orifice which is designed to receive at least the partly external part (32) or the reinforcement (30).

3. A seat cushion which has an approximately parallelepipedic configuration with a seating (101), a top (102), two opposite faces (103), one of which serves as a support, and two lateral cheeks (104) and which comprises an outer covering (10), an inner padding (20) and a reinforcement (30) having an internal part (31), an at least partly external part (32), the cushion being characterised in that the seating (101) has at least one sleeve (15) projecting into the inside, which is delimited by an inner wall (1502) and by an outer wall (1503) and which has an inner end (152) opened by a slot and an outer end (153) opened by an orifice and which is arranged so as to be capable of locally receiving at least the partly external part (32) of the reinforcement (30) such that the padding (20) which surrounds the inner wall (1502) presses the outer wall (1503) against at least this partly external part (32), at least in the area of the open inner end (152) in order to preclude any passage of the padding (20).

4. A cushion according to claim 3, characterised in that the seating (101) is made of a long and thin element (11) with two opposite edges (110) of the covering (10), which has at least one transverse opening (12), two panels (13) bordering this opening (12) on either side thereof and two extensions (14), each connected to one of the panels (13), the opening (12), panels (13) and extensions (14) being arranged such that, when the stubs of at least one of the edges (110) of the panels (13) are joined by a splice (151) they form at least one sleeve (15) which has an inner end (152) opened by a slot constituted by this opening (12) and an outer end (153) opened by an orifice, and which is designed to receive at least the partly external part (32) of the reinforcement (30).

5. A cushion according to claim 4, characterised in that the opening (12) opens into one of the opposite edges (110) of the element (11).

6. A cushion according to claim 4 or 5, characterised in that the element (11) is a single-piece band.

7. A cushion according to any one of the preceding claims 4 to 6, characterised in that the at least one of the opposite edges (110) of the long and thin element (11) is joined by a splice (151), particularly at one of the two opposite faces (103) of the cushion (100).

8. A cushion according to any one Of the preceding claims 3 to 7, characterised in that the long and thin element (11) has two transverse openings (12).

9. A cushion according to claim 3, characterised in that the sleeve (15) is obtained by thermoforming.

10. A cushion according to claim 9, characterised in that the sleeve (15) is integral with the seating (101).

11. A cushion according to either of claims 9 and 10, characterised in that the sleeve has a single edge.

12. A cushion according to any one of the preceding claims 3 to 11, the reinforcement (30) of which has an internal joint (33) linking the internal (31) and partly external (32) parts in order to define a tilting axis (△) which is parallel to the seating (101), characterised in that the tilting axis (△) is near the top (102) of the cushion (100).

13. An application of a cushion or an element according to any one of the preceding claims to the construction of a seat headrest, particularly for a ground vehicle.

14. An application of a cushion according to claim 13, in which the cushion comprises an inner padding (20) made of foam obtained in situ in the covering (10) after the positioning of the reinforcement (30).

## Patentansprüche

1. Element zur Bildung der Fußfläche eines Kissens, dadurch gekennzeichnet, daß dieses Element (11) wenigstens eine vorspringende Stulpe (15) trägt, die durch eine innere Wand (1502) und eine äußere Wand (1503) begrenzt ist und die ein offenes inneres Ende (152) in der Form eines Schlitzes und ein offenes äußeres Ende (152) in der Form einer Öffnung bildet und die so ausgebildet ist, daß sie lokal wenigstens den teilweise außenliegenden Teil (32) einer Versteifung (30) derart aufnehmen kann, daß eine auf die innere Wand (1502) ausgeübte Kraft die äußere Wand (1503) im Bereich des offenen inneren Endes (152) mindestens gegen den teilweise außenliegenden Teil (32) andrückt, um jeglichen Durchtritt einer Füllung (20) zu verhindern.

2. Element nach Anspruch 1, zur Bildung der Fußfläche eines Kissens, das annähernd die Form eines Parallelflachs hat, mit, außer der Fußfläche (101), einer Deckfläche (102), zwei gegenüberliegenden Flächen (103), von denen eine als Anlagefläche dient, und zwei Seitenwangen (104), und mit einem äußeren Bezug (10), einer inneren Füllung (20) und einer Versteifung (30) mit einem inneren Teil (31), einem zumindest teilweise außenliegenden Teil (32) und gegebenenfalls einem inneren Gelenk (33), das diese inneren (31) und teilweise außenliegenden Teile (32) verbindet, um eine Schwenkachse (△) zu bilden, die parallel zu der Fußfläche (101) ist, wobei das Element (11) dadurch gekennzeichnet ist, daß es dazu bestimmt ist, die Fußfläche (101) des Bezuges (10) zu bilden, länglich ist, mit zwei gegenüberliegenden Rändern (110), und wenigstens eine querverlaufende Öffnung (12), zwei diese Öffnung auf beiden Seiten begrenzende Laschen (13) und zwei Verlängerungen (14) aufweist, die an jede der Laschen (13) angeschlossen sind, wobei diese Öffnung (12), die Laschen (13) und die Verlängerungen (14) so ausgebildet sind, daß, wenn die Abschnitte wenigstens eines der Ränder (110) dieser Laschen (13) durch eine Verbindung (151) zusammengefügt werden, eine Stulpe (15) gebildet wird, die ein offenes inneres Ende (152) in der Form eines durch diese Öffnung (12) gebildeten Schlitzes und ein offenes äußeres Ende (153) in der Form einer Öffnung hat und die dazu bestimmt ist, wenigstens den teilweise außenliegenden Teil (32) der Versteifung (30) aufzunehmen.

3. Kissen für Sitze, das annähernd die Form eines Parallelflachs hat, mit einer Fußfläche (101), einer Deckfläche (102), zwei gegenüberliegenden Flächen (103), von denen eine als Anlagefläche dient, und zwei Seitenwangen (104), und das einen äußeren Bezug (10), eine innere Füllung (20) und eine Versteifung (30) mit einem inneren Teil (31), einem zumindest teilweise außenliegenden Teil (32) aufweist, dadurch gekennzeichnet, daß die Fußfläche (101) wenigstens eine Stulpe (15) trägt, die nach innen vorspringt und durch eine innere Wand (1502) und eine äußere Wand (1503) begrenzt wird und die ein offenes inneres Ende (152) in der Form eines Schlitzes und ein offenes äußeres Ende (153) in der Form einer Öffnung bildet und die so ausgebildet ist, daß sie lokal wenigstens den teilweise außenliegenden Teil (32) der Versteifung (30) so aufnehmen kann, daß die Füllung (20), die die innere Wand (1052) umgibt, die äußere Wand (1503) mindestens im Bereich des offenen inneren Endes (152) gegen wenigstens diesen teilweise außenliegenden Teil (32) andrückt, um jeglichen Durchtritt der Füllung (20) zu verhindern.

4. Kissen nach Anspruch 3, dadurch gekennzeichnet, daß die Fußfläche (101) aus einem länglichen Element (11) des Bezuges (10) mit zwei gegenüberliegenden Rändern (110) hergestellt ist, daß wenigstens eine querverlaufende Öffnung (12), zwei diese Öffnung (12) auf beiden Seiten begrenzende Laschen (13) und zwei Verlängerungen (14) aufweist, die sich an jede der Laschen (13) anschließen, wobei die Öffnung (12), die Laschen (13) und die Verlängerungen (14) so ausgebildet sind, daß sie, wenn die Abschnitte wenigstens eines der Ränder (110) dieser Laschen (13) durch eine Verbindung (151) zusammengefügt werden, wenigstens eine Stulpe (15) bilden, die ein offenes inneres Ende (152) in der Form eines durch diese Öffnung (12) gebildeten Schlitzes und ein offenes äußeres Ende in der Form einer Öffnung hat und die dazu bestimmt ist, wenigstens den teilweise außenliegenden Teil (32) der Versteifung (30) aufzunehmen.

5. Kissen nach Anspruch 4, dadurch gekennzeichnet, daß die Öffnung (12) in einen der gegenüberliegenden Ränder (110) des Elements (11) mündet.

6. Kissen nach Anspruch 4 oder 5, dadurch gekennzeichnet, daß das Element (11) ein einstückiges Band ist.

7. Kissen nach einem der vorstehenden Ansprüche 4 und folgende, dadurch gekennzeichnet, daß wenigstens einer der beiden gegenüberliegenden Ränder (110) des länglichen Elements (11) durch eine Verbindung (151) insbesondere mit wenigstens einer der beiden gegenüberliegenden Flächen (103) des Kissens (100) verbunden ist.

8. Kissen nach einem der vorstehenden Ansprüche 3 und folgende, dadurch gekennzeichnet, daß das längliche Element (11) zwei querverlaufende Öffnungen (12) bildet.

9. Kissen nach Anspruch 3, dadurch gekennzeichnet, daß die Stulpe (15) durch Thermoformung gebildet ist.

10. Kissen nach Anspruch 9, dadurch gekennzeichnet, daß die Stulpe (15) in einem Stück mit der Fußfläche (101) ausgebildet ist.

11. Kissen nach Anspruch 9 oder 10, dadurch gekennzeichnet, daß die Stulpe nur einen einzigen Rand bildet.

12. Kissen nach einem der vorstehenden Ansprüche 3 und folgende, dessen Versteifung (30) ein inneres Gelenk (33) hat, das die inneren (31) und teilweise außenliegenden Teile (32) verbindet, um eine Schwenkachse (△) zu definieren, die parallel zu der Fußfläche (101) ist, dadurch gekennzeichnet, daß die Schwenkachse (△) in der Nähe der Deckfläche (102) des Kissens (100) liegt.

13. Anwendung eines Kissens oder eines Elements nach einem der vorstehenden Ansprüche zur Bildung der Kopfstütze eines Sitzes, insbesondere für Landfahrzeuge.

14. Anwendung eines Kissens nach Anspruch 13, bei der das Kissen eine innere Füllung (20) aus Schaumstoff aufweist, die nach dem Einsetzen der Versteifung (30) in situ in dem Bezug (10) gebildet worden ist.
